Europäisches Patentamt

European Patent Office

Office européen des brevets

(11) Publication number: **0 122 127 B1**

## (12) EUROPEAN PATENT SPECIFICATION

(45) Date of publication of patent specification: **25.09.91**    (51) Int. Cl.⁵: **H04L 27/34**

(21) Application number: **84302355.7**

(22) Date of filing: **06.04.84**

(54) Radio communication system.

(30) Priority: **06.04.83 JP 59227/83**
             **06.04.83 JP 59228/83**

(43) Date of publication of application:
     **17.10.84 Bulletin 84/42**

(45) Publication of the grant of the patent:
     **25.09.91 Bulletin 91/39**

(84) Designated Contracting States:
     **DE FR GB IT NL**

(56) References cited:
     **DE-A- 2 051 879**
     **US-A- 3 311 828**

     **ASSOCIATION DES INGENIEURS ELEC-
     TRICIEN SORTIS DE L'INSTITUT ELEC-
     TROTECHNIQUE MONTEFIORE, Liège, BE,
     17th,18th June 1974, pages 4.1-4.11; J.M.
     FRIPIAT: "Modem à large bande pour la
     transmission de données à 64 Kbit/s dans
     un groupe primaire de système téléphon-
     ique à courants porteurs"**

(73) Proprietor: **FUJITSU LIMITED**
     **1015, Kamikodanaka Nakahara-ku
     Kawasaki-shi Kanagawa 211(JP)**

(72) Inventor: **Sasaki, Susumu**
     **1-8-17, Fujigaya
     Kugenuma Fujisawa-shi Kanagawa 251(JP)**
     Inventor: **Nakamura, Hiroshi**
     **3-13-4, Sagamidai
     Sagamihara-shi Kanagawa 228(JP)**

(74) Representative: **Sunderland, James Harry et al
     HASELTINE LAKE & CO Hazlitt House 28
     Southampton Buildings Chancery Lane
     London WC2A 1AT(GB)**

## Description

The present invention relates to a radio communication system in which data is transmitted on a radio transmission line.

In a radio communication system in which data is transmitted on a radio transmission line from a transmitter unit and the transmission data is demodulated and reproduced at a receiver unit, a carrier is digitally modulated according to data to be transmitted. A variety of methods have been proposed and put into practical use for such digital modulation. The present invention relates primarily to a quadrature amplitude modulation (QAM) method.

In a QAM radio communication system, the carrier is modulated in phase and, at the same time, in amplitude according to data to be transmitted. The data is thereby transmitted as one of many corresponding coded points arranged on an imaginary plane. This enables a large amount of data to be transmitted at one time and thus significantly increases the transmission capacity of a radio transmission line.

According to the QAM method, many coded points corresponding to data are created, as mentioned above. The number of coded points may be 16, 32, 64, and sometimes as much as 128 and so on. In the QAM method, one of the significant functions of the receiver unit is the recovery of a reference carrier from the transmission signal, which is used for synchronous detection. That is, the thus recovered carrier is used to demodulate the transmission data and reproduce the original data.

The most frequently used QAM method is the 16-level method. In this case, a process identical to a known process under a typical 4-phase phase shift keying (PSK) method is usually utilized for recovering the reference carrier. That is, the so-called multiply method, such as the two-multiply or four-multiply method, may be used for realizing the process. In this case, there is further provided a phase selection control process in a carrier recovery circuit.

In higher level QAM methods, such as the 16-level method, a problem arises when using the prior art carrier recovery circuit in suppressing so-called jitter (fluctuation) of the reference carrier. With 32-, 64-, and 128-level QAM methods, recovery of a carrier for synchronous detection, using a prior art carrier recovery circuit, is impossible for all intents and purposes.

In view of the above, it is desired to realize a QAM radio communication system for a multilevel QAM method of even 32-level or higher.

US-A-3 311 828 discloses a radio communication system with features corresponding to those of the accompanying claims 1 and 13. According to this document, a signal for carrier recovery is inserted at a frequency outside the frequency spectrum of the main transmission signal.

DE-A-2 051 879 discloses a radio communication system in which signals for carrier recovery are inserted just outside both extremes of the frequency spectrum of the main transmission signal.

Proposals of this type, however, are unsuitable for use in radio communication systems restricted to operating in a relatively narrow frequency range.

According to one aspect of the present invention, there is provided a radio communication system operated under a quadrature amplitude modulation method, including:

a transmitted unit operable to modulate a digital data signal clocked with a clock frequency $f_{CL}$, with a carrier having a frequency $f_0$ and to transmit the modulated wave signal to a radio transmission line; and

a receiver unit operable to receive, via said radio transmission line, the modulated wave signal, to extract the carrier therefrom and reproduce the original digital data signal with the use of the extracted carrier wave; wherein

the transmitter unit contains therein an insertion means for inserting at least one signal for carrier recovery into the modulated wave signal, the or each said signal for carrier recovery having a frequency defined as $f_0 + k.f_{CL}$, where an inequality of $0 < |k| < 1$ is satisfied; and

the receiver unit contains therein an extraction means for extracting received frequency components $f_0 + k.f_{CL}$, a separation means for separating the extracted frequency components $f_0$ and $k.f_{CL}$ from each other and a recovery means for recovering the original clock frequency component $f_{CL}$;

characterised in that said insertion means comprises a filter operable to create either one or two zero nodes at either one side of both sides of said modulated wave signal at either one or both of frequencies $f_0 + k.f_{CL}$ and $f_0 - k.f_{CL}$, respectively within the frequency spectrum of the modulated wave signal, and means to insert said one or two signals for carrier recovery into the thus-created node or nodes; and in that the receiver unit is operable to reproduce the original digital data signal, with the use of the recovered carrier frequency component $f_0$ and the recovered clock frequency component $f_{CL}$, from the received modulated wave signal.

According to a second aspect of the present invention, there is provided a radio communication system operated under a quadrature amplitude modulation method, including:

a transmitter unit operable to modulate a digital data signal clocked with a clock frequency $f_{CL}$, with a carrier having a frequency $f_O$ and to transmit the modulated wave signal to a radio transmission line; and

a receiver unit operable to receive, via said radio transmission line, the modulated wave signal to extract the carrier therefrom and reproduce the original digital data signal with the use of the extracted carrier wave; wherein

the transmitter unit contains therein an insertion means for inserting at least one signal for carrier recovery into the modulated wave signal; and

the receiver unit contains therein an extraction means for extracting received frequency components $f_O + k.f_{CL}$ from the received signal, a separation means for separating the extracted frequency components $f_O + k.f_{CL}$ from each other, and a recovery means for recovering the original clock frequency component $f_{CL}$; characterised in that

two signals for carrier recovery are inserted simultaneously into the modulated wave signal, within the frequency spectrum of the modulated wave signal, a first signal thereof having a frequency $f_O + k.f_{CL}$ and a second signal thereof having a frequency $f_O - k.f_{CL}$, where the constant k is determined as $\frac{1}{N}$ wherein N is a positive number larger than 1;

and in that the recovery means of said received unit includes a subtractor for cancelling the received signals for carrier recovery in the received modulated wave signal, said receiver unit being operable to reproduce the original digital data signal, using the recovered carrier frequency component $f_O$ and the recovered clock frequency component $f_{CL}$, from the received modulated wave signal.

An embodiment of the present invention can provide a radio communication system operated under a QAM method of up to 32 or more levels.

Reference is made, by way of example, to the accompanying drawings, wherein:

Fig. 1 is a graph of a spectrum of a conventional modulated wave signal transmitted from a transmitter unit;

Fig. 2 is a graph of a spectrum of a modulated wave signal for explaining suppression of a signal for carrier recovery due to restriction of frequency band;

Fig. 3 is a graph of a spectrum of a modulated wave signal for explaining the present invention;

Fig. 4 is a graph showing characteristics of a cosine roll-off filter;

Fig. 5A is a block diagram of an example of a transmitter unit adapted to operate in a radio communication system according to a first embodiment of the present invention;

Fig. 5B illustrates a detailed example of a data processor of Fig. 5A;

Fig. 5C is a block diagram of an example of a transmitter unit to be used with a receiver unit shown in Fig. 7;

Fig. 6 is a block diagram of a first example of a receiver unit adapted to operate in a radio communication system according to the first embodiment of the present invention;

Fig. 7 is a block diagram of a second example of a receiver unit adapted to operate in a radio communication system according to the first embodiment of the present invention;

Fig. 8A is a simple block diagram of a conventional receiver unit to which the principle of the present invention cannot be adopted;

Fig. 8B is a simple block diagram of a conventional receiver unit to which the principle of the present invention can be adopted;

Fig. 9 is a graph of a spectrum of the modulated wave signal for explaining a second embodiment of the present invention;

Fig. 10 is a block diagram of an example of a transmitter unit adapted to operate in a radio communication system according to the second embodiment of the present invention;

Fig. 11 is a block diagram of one example of a receiver unit adapted to operate in a radio communication system according to the second embodiment of the present invention; and

Fig. 12 is a detailed circuit diagram of an example of a subtractor shown in Fig. 11.

Before describing the preferred embodiments of the present invention, an explanation will be given of the prior art for reference.

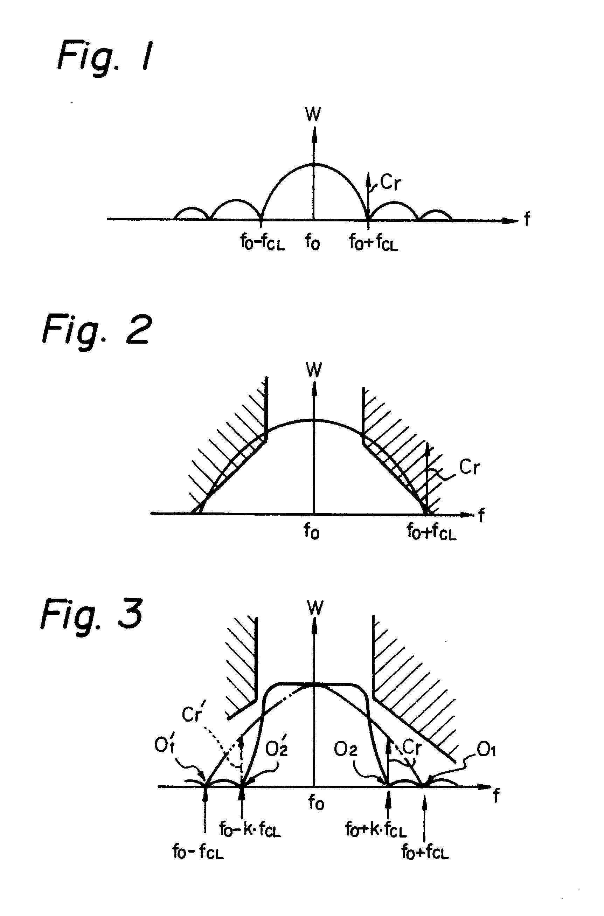

Figure 1 is a graph of a spectrum of a conventional modulated wave signal transmitted from a transmitter unit. The abscissa f indicates frequency, and the ordinate W indicates the power of the conventional modulated wave signal. With a higher multilevel QAM wave signal, e.g., 32-level or more, it is very difficult for the receiver unit to extract the reference carrier from the received modulated wave signal, as mentioned previously. For this, the usual practice has been to insert a signal for carrier recovery in the modulated wave signal in advance at the transmitter unit to facilitate recovery of the reference carrier by the receiver unit. The receiver unit can thus reproduce the original digital data signal using the thus easily recovered carrier by means of simple hardware. In this case, it has long been common practice to insert such a signal for carrier recovery at one or more zero nodes of the spectrum. Accordingly, the frequency of each signal for carrier recovery is necessarily determined to be $(f_O + f_{CL})$ or $(f_O - f_{CL})$, since each zero node stands at such frequency, where the symbol $f_O$ denotes a carrier frequency and $f_{CL}$ a clock frequency with which the digital data signal is clocked. In Fig. 1, there is illustrated, as one example, a signal $C_r$ for carrier recovery, which signal stands on the zero node of $(f_O + f_{CL})$. Use of a signal $C_r$ is a well-known technique. The insertion of the signal $C_r$ at such a zero node has no deleterious effect on the inherent digital data signal in terms of the signal-to-noise ratio (S/N) and interference therebetween. Also, the signal $C_r$ itself suffers from no deleterious interference by the digital data signal component and prevents S/N deterioration, since the signal $C_r$ exists outside the digital data signal band. Incidentally, it is known that each zero node is created periodically depending on the so-called Nyquist rate.

Employment of such a signal $C_r$ inserted at the zero node appearing at the Nyquist rate, however, is not so advantageous for commercially adopted or publicly used radio communication systems because they do not operate over a wide frequency range. They are usually restricted to operating in a relatively narrow range due to national radio laws, such as Federal Communications Commission (FCC) Part 21.106 Emission limitation, in U.S.A. and Radio Regulations by International Telecommunication Union (ITU) Chapter 1, Article 2, Designation of Emissions, in Europe.

This makes it difficult to transmit the signal $C_r$ from the transmitter unit to the receiver unit with sufficiently high power. Figure 2 is a graph of a spectrum of the modulated wave signal for explaining suppression of the signal $C_r$ by restriction of the frequency band. In Fig. 2, the hatched areas represent frequency bands and powers restricted by the radio laws, i.e., prohibited frequency bands and powers. As a result of such restrictions, the signal $C_r$ may be masked and cancelled.

According to a first embodiment of the present invention, one or two signals for carrier recovery are inserted in the modulated wave signal with one or two frequencies $(f_O + f'_{CL})$ and $(f_O - f'_{CL})$. The frequency $f'CL$ is defined as $k \cdot f_{CL}$, where the constant k satisfies an inequality $0 < |k| < 1$, i.e., $0 < k < 1$ or $-1 < k < 0$. To be more specific, according to the first embodiment, an insertion means is contained in the transmitter unit. The insertion means is operative to create zero nodes at both sides of the spectrum of the modulated wave signal at frequencies $(f_O + k \cdot f_{CL})$ and $(f_O - k \cdot f_{CL})$ and insert at least one signal for carrier recovery at either or both of the thus created zero nodes. The creation of the zero nodes can be achieved by means of a filter mentioned hereinafter. Thus, in the receiver unit, the original digital data signal is reproduced by using the thus inserted signal or signals for carrier recovery.

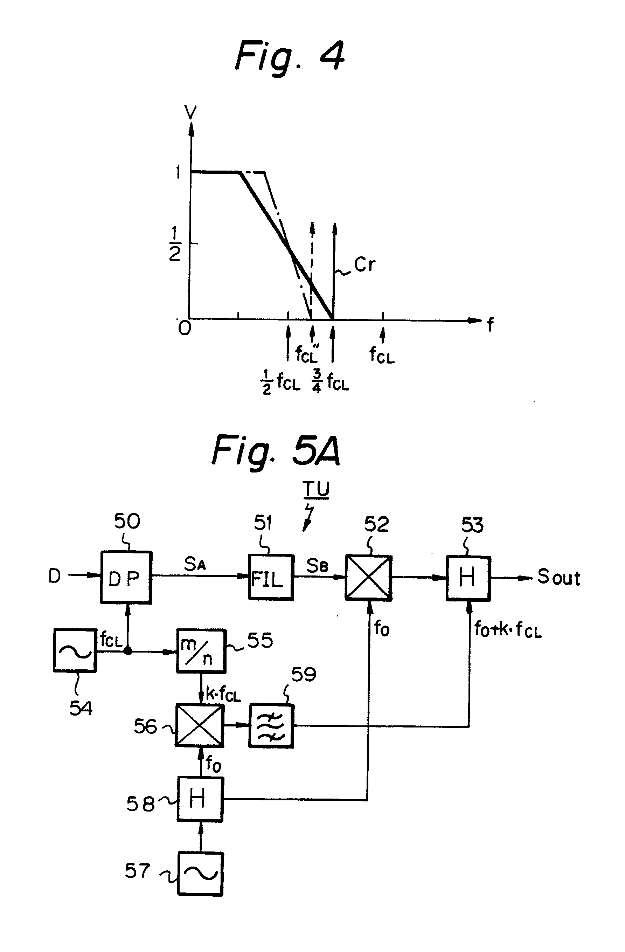

Figure 3 is a graph of a spectrum of a modulated wave signal for explaining the present invention. In this graph, characters $O_1$ and $O'_1$ denote zero nodes necessarily produced at both sides of the spectrum of the inherent modulated wave signal, i.e., zero nodes which would be produced with the aforesaid Nyquist rate as shown in Figs. 1 and 2 at frequencies $(f_O + f_{CL})$ and $(f_O - f_{CL})$. Characters $O_2$ and $O'_2$ are zero nodes created deliberately according to the first embodiment. The zero nodes $O_2$ and $O'_2$ are positioned closer to the carrier frequency $f_O$ than the zero nodes $O_1$ and $O'_1$ are, since the zero nodes $O_2$ and $O'_2$ are positioned at frequencies $(f_O + k \cdot f_{CL})$ and $(f_O - k \cdot f_{CL})$, where k satisfies $0 < |k| < 1$. As is clear from Fig. 3, the signal $C_r$ according to the first embodiment may no longer be masked by the band restriction, i.e., the hatching areas, due to radio laws, since the signal $C_r$ is inserted at frequency $f_O + k \cdot f_{CL}$. Conversely, the signal for carrier recovery can be inserted at frequency $(f_O - k \cdot f_{CL})$, as shown by $C'_r$ , instead of $C_r$ It is also possible to insert both signals $C_r$ and $C'_r$ simultaneously into the modulated wave signal, since the two zero nodes $O_2$ and $O'_2$ are necessarily created simultaneously at the frequencies $(f_O + k \cdot f_{CL})$ and $(f_O - k \cdot f_{CL})$. This is because, when there is a frequency band restriction on a base band signal, two zero nodes are necessarily produced symmetrically relative to the frequency $f_O$ as center, in the modulated wave signal.

The spectrum shown in Fig. 3 can be obtained with the use of the previously noted filter. The filter, to be contained in the insertion means, can, for example, be a cosine roll-off filter.

Figure 4 is a graph of the characteristics of a cosine roll-off filter. In the graph, the abscissa f indicates frequency and the ordinate V indicates voltage. As seen from the graph, a zero node is created at the illustrated point closer to a zero point 0 than the point where the clock frequency $f_{CL}$ is located. Accordingly, the signal $C_r$ is inserted in the transmitter unit at that zero node. Assuming that a roll-off ratio of the cosine roll-off filter is set to be 50%, the zero node is usually created at a frequency $\frac{3}{4}f_{CL}$ from the zero point. Therefore, the idea of the present invention is attained, i.e., the zero node at the frequency $(f_O + k \cdot f_{CL})$ of Fig. 3 is created by using the frequency $\frac{3}{4}f_{CL}$ , shown in Fig. 4, existing in the related base band signal, where the constant k is $\frac{3}{4}$. If the frequency $\frac{3}{4}f_{CL}$ is not fully away from the restriction band (hatching areas), a frequency $f''_{CL}$ of Fig. 4 can be used, positioned closer to the zero point 0 than the frequency $\frac{3}{4}f_{CL}$. Such a frequency shift is easily achieved by increasing the roll-off ratio over 50%.

The filter contained in the insertion means is not necessarily a cosine roll-off filter. Other filter means may also be used. One alternative is a partial response transmission line in which equalization is performed so as to discretely produce so-called inter-symbol interferences. A second alternative is a Gaussian-type filter. In any event, a zero node can be created at a frequency $f'_{CL}$ $(= k \cdot f_{CL})$

lower than $f_{CL}$.

Figure 5A is a block diagram of an example of a transmitter unit adapted to operate in a radio communication system according to a first embodiment of the present invention. In the transmitter unit TU, the aforesaid filter, such as a cosine roll-off filter, is represented by a filter (FIL) 51. A digital data signal D to be transmitted is processed in a data processor (DP) 50 to produce an analog data signal $S_A$.

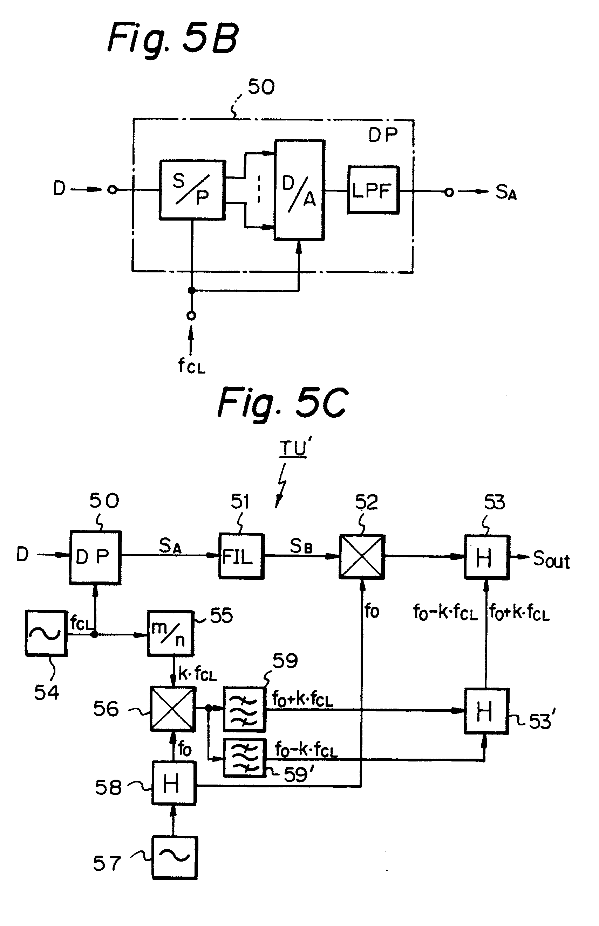

Figure 5B illustrates a detailed example of the data processor 50 of Fig. 5A. In Fig. 5B, the digital data signal D coded by, for example, pulse code modulation (PCM), is supplied in the form of serial data. The serial data D is converted into parallel data by a serial/parallel (S/P) converter. The parallel data is transformed into an analog data signal by a digital/analog (D/A) converter. Then, the analog data signal is produced via a low pass filter (LPF) to obtain the signal $S_A$. The above data processing is clocked by a signal having the frequency $f_{CL}$.

Returning to Fig. 5A, the analog data signal $S_A$ is applied to the filter 51, where the aforesaid zero nodes, such as $O_2$ and $O'_2$ in Fig. 3, are created in the spectrum. The filtered signal $S_B$ having zero nodes is input to a modulator 52 and modulated therein with the carrier having the frequency $f_O$. The carrier is supplied to the modulator 52 from a carrier generator 57 via a hybrid circuit 58. The modulated signal from the modulator 52 is output as a modulated wave signal $S_{OUT}$ via a hybrid circuit 53. In this case, it is essential to the present invention to insert the signal $C_r$ having the frequency $(f_O + k \cdot f_{CL})$ shown in Fig. 3 into the modulated wave signal $S_{out}$ at the related zero node.

In the case where a cosine roll-off filter is used as the filter 51, to exhibit the characteristics of Fig. 4 and if the roll-off ratio thereof is determined to be 50%, the zero node is created at the frequency $\frac{3}{4}f_{CL}$. For generating the carrier recovery signal firstly a frequency divider (m/n) 55 which has a dividing ratio $\frac{m}{n}$ is employed. The ratio $\frac{m}{n}$ is here equal to $\frac{3}{4}$. Thus, a signal having the frequency $f_{CL}$ from a clock generator 54 is divided with the ratio $\frac{m}{n}$ to produce a signal having the frequency $k \cdot f_{CL}$, where k corresponds to $\frac{m}{n}$ and equals , here, $\frac{3}{4}$. The signal of $k \cdot f_{CL}$ is mixed with the signal of $f_O$ in a mixer 56. Then the mixed signal is input to a band-pass filter 59 to extract the desired signal having the frequency $(f_O + k \cdot f_{CL})$. At the hybrid circuit 53, the filtered signal of $(f_O + k \cdot f_{CL})$ is inserted, as the signal $C_r$, into the corresponding zero node in the spectrum of the modulated wave signal from the modulator 52. As a result, the modulated wave signal $S_{out}$ contains therein the signal $C_r$ which is positioned in frequency far from the restriction band, as illustrated by the hatched areas of Fig. 3. The signal $S_{OUT}$ containing the signal $C_r$ is transmitted, via the radio transmission line (not shown), to the receiver unit in which the original digital data is reproduced by utilizing the signal $C_r$.

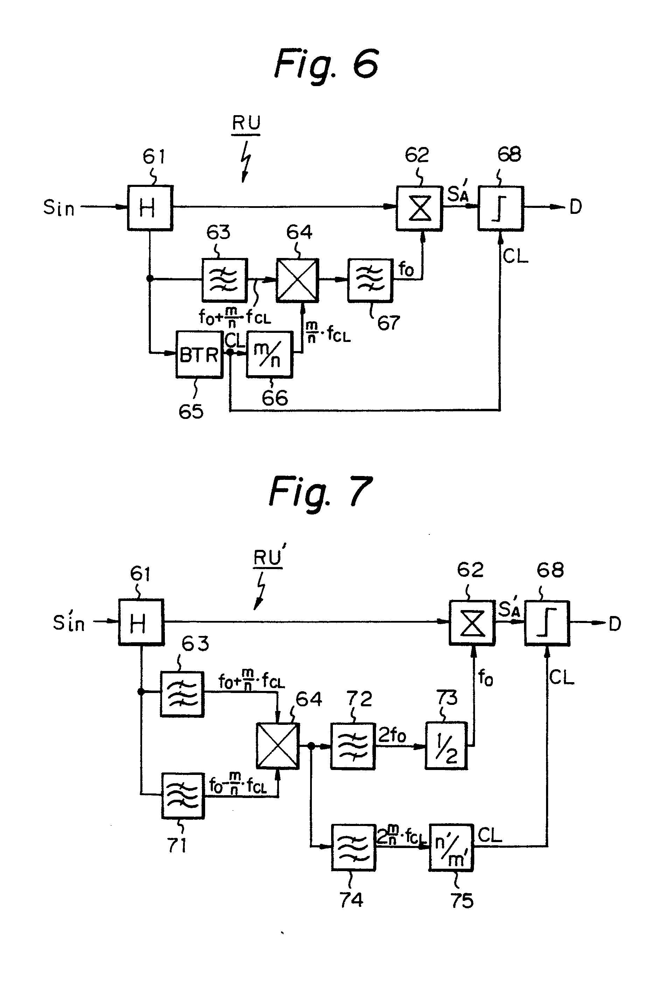

Figure 6 is a block diagram of a first example of a receiver unit adapted to operate in a radio communication system according to the first embodiment of the present invention. The receiver unit RU receives the modulated wave signal as a signal $S_{in}$ , given as $S_{out}$ from the transmitter unit TU of Fig. 5A. The signal $S_{in}$ is supplied, via hybrid circuit 61, to a detector 62 and mixed therein with the reference carrier having the frequency $f_O$ to demodulate and reproduce an analog data signal $S'_A$ corresponding to the signal $S_A$ of Fig. 5. The analog data signal $S'_A$ is input to a comparator 68 to produce the original digital data signal D in synchronism with a clock signal CL.

The carrier of $f_O$ , which is to be supplied to the detector 62, is recovered as follows. The modulated wave signal $S_{in}$ contains therein the signal $C_r$ of $(f_O + \frac{m}{n} \cdot f_{CL})$. The signal $C_r$ is extracted by means of a band-pass filter 63 tuned to the frequency $(f_O + \frac{m}{n} \cdot_{CL})$. The filtered signal of $(f_O + \frac{m}{n} \cdot f_{CL})$ is given to a modulator 64 at one input. The modulated wave signal $S_{in}$ is, on the other hand, input to a known bit timing recovery circuit (BTR) 65 via the hybrid circuit 61. Then, the BTR 65 recovers the clock signal CL having the clock frequency $f_{CL}$. Since the modulated wave signal $S_{in}$ has been band-restricted beforehand at the base band stage and then modulation operation achieved, the signal CL can easily be recovered by detecting the periodic change of the so-called eye pattern of the signal $S_{in}$. The signal CL is input to a frequency divider 66 identical to the divider 55 of Fig. 5A and having the same dividing ratio of $\frac{m}{n}$ . In this example, the ratio $\frac{m}{n}$ is $\frac{3}{4}$. Therefore, the signal of $\frac{3}{4}f_{CL}$ can be recovered thereby. The signal of $\frac{m}{n} \cdot f_{CL}$ ( $= \frac{3}{4}f_{CL}$) is supplied to the modulator 64 at its other input, so that the signal of $(f_O + \frac{m}{n} \cdot f_{CL})$ from the filter 63 is modulated with the signal of $\frac{m}{n} \cdot f_{CL}$ from the divider 66. The thus modulated signal contains two modulation signals, one with a frequency $f_O$ ($= f_O + \frac{m}{n} \cdot f_{CL} - \frac{m}{n} \cdot f_{CL}$) and the other with a frequency of $(f_O + \frac{2m}{n} \cdot f_{CL})$ ($= f_O + \frac{m}{n} \cdot f_{CL} + \frac{m}{n} \cdot f_{CL}$). The latter modulation signal of $f_O + \frac{2m}{n} \cdot f_{CL}$ is cancelled by means of a band-pass filter 67 so as to obtain the desired carrier of $f_O$ therefrom. The modulated wave signal $S_{in}$ is synchronously detected with the carrier at the detector 62 to produce the aforesaid analog data signal $S'_A$.

Figure 7 is a block diagram of a second example of a receiver unit adapted to operate in a radio communication system according to the first embodiment of the present invention. The receiver unit RU' receives the modulated wave signal $S'_{in}$

which simultaneously contains the signal $C_r$ and $C'_r$, both shown in Fig. 3. The signal $C'_r$ has the frequency $(f_O - \frac{m}{n} \cdot f_{CL})$. In this regard, the transmitter unit TU of Fig. 5A must be modified to be the unit TU' as illustrated in Fig. 5C.

Figure 5C is a block diagram of an example of a transmitter unit to be used with the receiver unit RU' shown in Fig. 7. The differences here from Fig. 5A are that another band-pass filter 59' and another hybrid circuit 53' are further employed. The filter 59' provides the signal $C'_r$ having the frequency $(f_O - \frac{m}{n} \cdot f_{CL})$. The signal $C'_r$ is added to the signal $C_r$ of $(f_O + \frac{m}{n} \cdot f_{CL})$ at the circuit 53'.

Returning to Fig. 7 again, the receiver unit RU' operates in a similar manner to the receiver unit RU of Fig. 6, wherein the modulated wave signal $S'_{in}$ is synchronously detected by the carrier of $f_O$ and decoded thereby, so that the analog data signal $S'_A$ is reproduced and, thereafter, the original digital data signal D is obtained. The carrier of $f_O$, however, is recovered under an operation different from that in the receiver unit RU of Fig. 6. That is, the modulated wave signal $S'_{in}$ is first branched into two signals at the hybrid circuit 61. One signal is applied to the detector 62, as in the receiver unit RU. The other is applied to both band-pass filters 63 and 71 simultaneously. The filter 63 extracts the signal $C_r$ of $(f_O + \frac{m}{n} \cdot f_{CL})$, as in the receiver unit RU, while the filter 71 extracts the signal $C'_r$ of $(f_O - \frac{m}{n} \cdot f_{CL})$. These filtered signals $C_r$ and $C'_r$ are mixed at the modulator 64 to produce two modulation signals, one with a frequency $2f_O$ $(= f_O + \frac{m}{n} \cdot f_{CL} + f_O - \frac{m}{n} \cdot f_{CL})$ and the other with a frequency $2\frac{m}{n} \cdot f_{CL}$ $(= f_O + \frac{m}{n} \cdot f_{CL} + f_O - \frac{m}{n} \cdot f_{CL})$. These two modulation signals are separated individually by means of band-pass filters 72 and 74, which are tuned to the frequencies $2f_O$ and $2\frac{m}{n} \cdot f_{CL}$, respectively. Therefore, a signal of $2f_O$ and a signal of $2\frac{m}{n} \cdot f_{CL}$ are provided from individual filters 72 and 74. The signal of $2f_O$ is halved in frequency by a frequency divider 73 having a dividing ratio $\frac{1}{2}$. Accordingly, a carrier of frequency $f_O$ is obtained there from. The signal of $2\frac{m}{n} \cdot f_{CL}$ is divided in frequency by a frequency divider 75 having a dividing ratio $\frac{n}{m}'$, which is determined as $\frac{1}{2} \times \frac{n}{m}$. If $\frac{m}{n}$ is set to $\frac{3}{4}$ $(k = \frac{m}{n} = \frac{3}{4})$, the ratio $\frac{n}{m}'$ becomes $\frac{2}{3}$. Accordingly a clock signal CL having the frequency $f_{CL}$ is obtained $(2 \times \frac{3}{4} f_{CL} \times \frac{2}{3} = 1 \times f_{CL})$.

The receiver unit RU' is more advantageous than the receiver unit RU in that the unit RU' does not need the bit timing recovery circuit 65. Therefore, the unit RU' can be manufactured less expensively. However, the unit RU' can only be used with the transmitter unit TU' of Fig. 5C, which employs the additional filter 59' and hybrid circuit 53' not needed in the transmitter unit TU of Fig. 5A. Further, a radio communication system comprised of the transmitter unit TU' has the disadvantage of a lower transmission power of the inherent data signal due to the power consumed in transmitting the signal $C'_r$ in addition to the power for the signal $C_r$. Consequently, a radio communication system comprised of TU' and RU' is basically advantageous only in a system using a plurality of identical receiver units in the sense of allowing reduction of manufacturing costs.

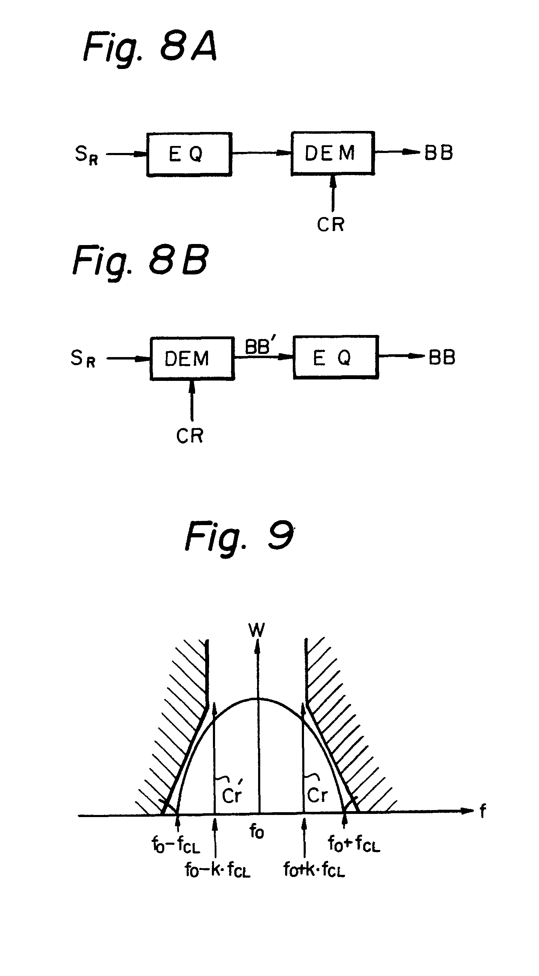

A radio communication system according to a second embodiment of the present invention is described below. According to the second embodiment, both the signals $C_r$ and $C'_r$ are forcibly inserted inside the modulated wave signal without creating any zero nodes, e.g., $O_2$ and $O'_2$ shown in Fig. 3. It is common sense that insertion of the signals $C_r$ and $C'_r$ into the inherent data signal is not beneficial in that it deteriorates the S/N. Even so, in a radio communication system operated under a QAM method of 32-level or higher, it is more preferable to ensure recovery of the carrier than to maintain the S/N at a high level. This will be clarified briefly with reference to Figs. 8A and 8B.

Figures 8A and 8B are simple block diagrams of conventional receiver units to which the principle of the present invention cannot and can be adopted, respectively. In Figs. 8A and 8B, each block EQ represents an equalizer and each block DEM represents a demodulator. If the received signal $S_R$ contains no carrier recovery signals $(C_r, C'_r)$, as usual, the equalizer EQ must be of high quality and capability in order to ensure recovery of the carrier CR under the aforesaid multiply method from the signal $S_R$, especially if the receiving signal $S_R$ is distorted. However, such a high quality equalizer is very expensive, since it works in an intermediate frequency range, i.e., high frequency range. To make matters worse, if the equalizer EQ fails to assist the recovery of the carrier CR, no base band signal BB is reproduced. Therefore, it is necessary to give highest priority to recovery of the carrier CR.

According to the present invention, although the receiving signal $S_R$ of Fig. 8B has a poor S/N due to the presence of the signals $C_r$ and $C'_r$, recovery of the carrier CR is ensured because the carrier component is forcibly inserted beforehand, at the transmitter side, into the signal $S_R$. Therefore the demodulator DEM of Fig. 8B can reliably produce, with the use of the carrier, the base band signal BB' of Fig. 8B. However, the signal BB' has a poor S/N due to the insertion of the signals $C_r$ and $C'_r$. Therefore, the equalizer EQ of Fig. 8B must also be of a high quality in order to correctly equalize the signal BB'. In this case, however, it is not necessary to have such a high quality and capability as the equalizer EQ of Fig. 8A. This is because the equalizer EQ of Fig. 8B works in a base band frequency range, i.e., low frequency range. As a result, in the second embodiment of the present invention, the disadvantage of a lower signal to noise ratio is compensated by the advantage of ensuring the recovery of the carrier.

Figure 9 is a graph of a spectrum of the modulated wave signal for explaining the second embodiment of the present invention. As shown on the graph, two signals $C_r$ and $C'_r$ are forcibly inserted inside the signal band. The signal $C_r$ has a frequency $(f_O + k \cdot f_{CL})$, and the signal $C_r'$ has a frequency $(f_O - k \cdot f_{CL})$, where k is $\frac{1}{N}$. The constant N is a positive number larger than 1, preferably an even number such as 2, 4, and 6. The following explanation will take as an example a case where N is 2, i.e., $k = \frac{1}{N} = \frac{1}{2}$.

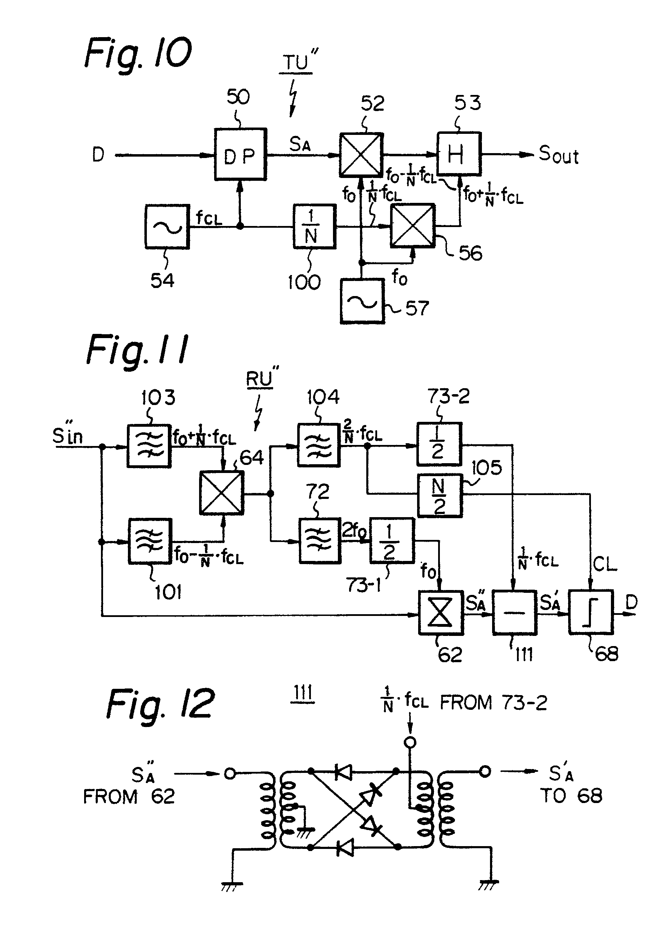

Figure 10 is a block diagram of an example of a transmitter unit adapted to operate in a radio communication system according to the second embodiment of the present invention. In the transmitter unit TU", a frequency divider 100 is newly employed. The divider 100 is substantially identical to the divider 55 shown in Figs. 5A and 5C. The divider 100 has a dividing ratio $\frac{1}{N}$ (N = 2). Operation is substantially the same as for the transmitter units TU and TU' explained previously. The mixer 56 produces the signal $C_r$ of $(f_O + \frac{1}{N} \cdot f_{CL})$ and the signal $C'_r$ of $(f_O - \frac{1}{N} \cdot f_{CL})$. The hybrid circuit 53 produces a modulated wave signal $S_{out}$ having the spectrum shown in Fig. 9.

Figure 11 is a block diagram of one example of a receiver unit adapted to operate in the radio communication system according to the second embodiment of the present invention. The receiver unit RU" receives the modulated wave signal as a signal $S"_{in}$, given as $S_{out}$ from the transmitter unit TU" of Fig. 10. The operation of the unit Ru" is basically the same as for the receiver unit RU' of Fig. 7. The modulated wave signal $S"_{in}$ is input to a band-pass filter 103 (corresponding to the filter 63 of Fig. 7), a band-pass filter 101 (corresponding to the filter 71 of Fig. 7), and the detector 62. The filters 103 and 101 are tuned to frequencies $(f_O + \frac{1}{N} \cdot f_{CL})$ and $(f_O - \frac{1}{N} \cdot f_{CL})$, respectively. Then, the modulator 64 produces two modulation signals, one with a frequency $2f_O$ $(= f_O + \frac{1}{N} \cdot f_{CL} + f_O - \frac{1}{N} \cdot f_{CL})$, and the other with a frequency $2\frac{1}{N} \cdot f_{CL}$ $(= f_O + \frac{1}{N} \cdot f_{CL} - f_O + \frac{1}{N} \cdot f_{CL})$. These two modulation signals are separated individually by means of band-pass filters 72 and 104 (which corresponds to the filter 74 of Fig. 7) which are tuned to frequencies $2f_O$ and $2\frac{1}{N} \cdot f_{CL}$, respectively. Thereby, a signal of $2f_O$ and a signal of $2\frac{1}{N} \cdot f_{CL}$ are provided from individual filters 72 and 104. The signal of $2f_O$ is halved in frequency by a frequency divider 73-1 having a dividing ratio $\frac{1}{2}$. Accordingly, a carrier of $f_O$ is obtained therefrom. The signal of $2\frac{1}{N} \cdot f_{CL}$ is multiplied in frequency by an $\frac{N}{2}$ multiplier 105

(corresponding to the divider 75 of Fig. 7) having a multiplying ratio $\frac{N}{2}$, and thereby the clock signal CL of $f_{CL}$ is recovered. It should be understood that, when N is 2, the $\frac{N}{2}$ multiplier has substantially no effect, because the input is multiplied by 1. That is, the $\frac{N}{2}$ multiplier 105 is not needed if N = 2. When N equals, for example, 4, the $\frac{N}{2}$ multiplier 105 produces an output with a frequency twice that of the input.

The signal of $\frac{2}{N} \cdot f_{CL}$ from the filter 104 is halved in frequency by a frequency divider 73-2 having a dividing ratio $\frac{1}{2}$, so as to produce a signal having a frequency $\frac{1}{N} \cdot f_{CL}$. The signal of $\frac{1}{N} \cdot f_{CL}$ is given to a subtractor 111 which receives an analog data signal $S"_A$. It should be noted that, in the detector 62, the modulated wave signal $S"_{in}$ is synchronously detected with the recovered carrier of $f_O$ to produce the signal $S"_A$.

The signal $S"_A$ is not yet in a form suitable for reproducing the original digital data D, such as the signal $S'_A$. This is because, the signal $S"_A$ from the detector 62 is not stable, but is periodically changed with an offset frequency, which is the same as the frequency of the offset frequency component, i.e., $\frac{1}{N} \cdot f_{CL}$ of each signal $(C_r, C'_r)$ for carrier recovery. In order to cancel the change by the offset frequency component $\frac{1}{N} \cdot f_{CL}$, the signal of $\frac{1}{N} \cdot f_{CL}$ from the frequency divider 73-2 is subtractively combined with the signal $S"_A$ at the subtractor 111 to give the signal $S'_A$. The subtractor 111 is mentioned briefly below.

Figure 12 is a detailed circuit diagram of an example of the subtractor 111 shown in Fig. 11. As apparent from Fig. 12, the subtractor 111 can be constructed as a conventional keying circuit, available as, e.g., a ring modulator (RM). The phase of the signal $S"_A$ is reversed by 180° in accordance with the frequency $\frac{1}{N} \cdot f_{CL}$, and the signal $S"_A$ is smoothed to form the desired signal $S'_A$.

As mentioned above in detail, the present invention provides a radio communication system operated under a QAM method of up to 32-level or higher, in which recovery of the carrier can be ensured at the receiver side.

## Claims

1. A radio communication system operated under a quadrature amplitude modulation (QAM) method, including:

   a transmitter unit (TU,TU') operable to modulate a digital data signal (D) clocked with a clock frequency $f_{CL}$, with a carrier having a frequency $f_O$ and to transmit the modulated wave signal (Sout) to a radio transmission line; and

   a receiver unit (RU,RU') operable to receive, via said radio transmission line, the modulated wave signal (Sin), to extract the carrier therefrom and reproduce the original digital data signal (D) with the use of the extracted carrier wave; wherein

the transmitter unit (TU,TU') contains therein an insertion means for inserting at least one signal for carrier recovery into the modulated wave signal, the or each said signal for carrier recovery having a frequency defined as $f_O + k.f_{CL}$, where an inequality of $O < |k| < 1$ is satisfied; and

the receiver unit (RU,RU') contains therein an extraction means (63,71) for extracting received frequency components $f_O + k.f_{CL}$, a separation means (67) for separating the extracted frequency components $f_O k.f_{CL}$ from each other and a recovery mean (65) for recovering the original clock frequency component $f_{CL}$;

characterised in that said insertion means comprises a filter (51) operable to create either one or two zero nodes at either one side of both sides of said modulated wave signal at either one or both of frequencies $f_O + k.f_{CL}$ and $f_O - k.f_{CL}$, respectively, within the frequency spectrum of the modulated wave signal, and means to insert said one or two signals for carrier recovery into the thus-created node or nodes; and in that the receiver unit (RU, RU') is operable to reproduce the original digital data signal (D), with the use of the recovered carrier frequency component $f_O$ and the recovered clock frequency component $f_{CL}$, from the received modulated wave signal.

2. A system as set forth in claim 1, wherein said filter (51) is a cosine roll-off filter, the constant k being determined by a roll-off ratio thereof.

3. A system as set forth in claim 1, wherein said filter (51) is a Gaussian-type filter.

4. A system as set forth in claim 1, wherein said filter (51) is constructed as a partial response transmission line in which equalization is performed so as to discretely produce so-called inter-symbol interferences.

5. A system as set forth in any preceding claim, wherein said insertion means includes therein a hybrid circuit (53) which is operable to receive, on one hand, an output signal from a modulator (52) in which the filtered signal from said filter (51) is modulated with said carrier of $f_O$ and to receive, on the other hand, said signal for carrier recovery of $f_O + k.f_{CL}$, thereby producing said modulated wave signal (Sout).

6. A system as set forth in any preceding claim, wherein the constant k is $\frac{m}{n}$, where m and n are positive integers and m < n is satisfied.

7. A system as set forth in claim 6, wherein, in said transmitter unit (TU), said insertion means further comprises a frequency divider (55) having a dividing ratio $\frac{m}{n}$ and receiving a clock signal of $f_{CL}$ from a clock generator (54) to produce a signal of $\frac{m}{n}.f_{CL}$, a mixer (56) receiving both the signal of $\frac{m}{n}.f_{CL}$, and said carrier of $f_O$ from a carrier generator (57), and a bandpass filter (59) to produce said signal for carrier recovery of $f_O + \frac{m}{n}.f_{CL}$ to be input to said hybrid circuit (53).

8. A system as set forth in claim 6 or 7, wherein, in said receiver unit: said extraction means comprises a band-pass filter (63) to filter said signal of $f_O + \frac{m}{n}.f_{CL}$ from the received modulated wave signal, which filter (63) is tuned to the frequency $f_O + \frac{m}{n}.f_{CL}$; said separation means and said recovery means are cooperatively coupled with each other and constructed by, as a whole, a bit timing recovery circuit (65) receiving the received modulated wave signal and recovering the signal of $f_{CL}$ therefrom, a frequency divider (66) having a dividing ratio $\frac{m}{n}$ which receives the recovered signal of $f_{CL}$ and then produces the signal of $\frac{m}{n}.f_{CL}$, a modulator (64) being operative to modulate the signal of $f_O + \frac{m}{n}.f_{CL}$ from said band-pass filter (63) of said extracting means with the signal of $\frac{m}{n}.f_{CL}$ from said frequency divider of dividing ratio $\frac{m}{n}$ and producing two modulation signals of $f_O$ and $f_O + 2\frac{m}{n}.f_{CL}$, and a band-pass filter (67) to extract the modulation signal of $f_O$, as said carrier, among the two.

9. A system as set forth in any of claims 1 to 4, wherein said insertion means includes therein a hybrid circuit (53) which is operable to receive, on one hand, an output signal from a modulator (52) in which the filtered signal from said filter (51) is modulated with said carrier of $f_O$ and to receive, on the other hand, said signals for carrier recovery of $f_O + k.f_{CL}$ and $f_O - k.f_{CL}$, thereby producing said modulated wave signal (Sout).

10. A system as set forth in claim 9, wherein the constant k is $\frac{m}{n}$, where m and n are positive integers and m < n is satisfied.

11. A system as set forth in claim 10, wherein, in said transmitter unit (TU'), said insertion means further comprises a frequency divider (55) having a dividing ratio $\frac{m}{n}$ and receiving a clock signal of $f_{CL}$ from a clock generator (54) to produce a signal of $\frac{m}{n} . f_{CL}$, a mixer (56) receiving both the signal of $\frac{m}{n} . f_{CL}$ and said carrier of $f_0$ from a carrier generator (57), and first and second band-pass filters (59,59') to produce said signals for carrier recovery of $f_0 + \frac{m}{n} . f_{CL}$ and $f_0 - \frac{m}{n} . f_{CL}$, respectively, to be input to said hybrid circuit (53).

12. A system as forth in claim 10 or 11, wherein, in said receiver unit (RU'): said extraction means is comprised of first and second band-pass filters (63,71) to filter said signals of $f_0 + \frac{m}{n} . f_{CL}$ and $f_0 - \frac{m}{n} . f_{CL}$, respectively from the received modulated wave signal, which filters (63,71) are tuned to the frequencies $f_0 + \frac{m}{n} . f_{CL}$ and $f_0 - \frac{m}{n} . f_{CL}$, respectively; said separation means and said recovery means are cooperatively coupled with each other and constructed by, as a whole, a modulator (64) receiving both filtered signals of $f_0 + \frac{m}{n} . f_{CL}$ and fo $- \frac{m}{n} . f_{CL}$ from said first and second band-pass filters (63,71) and producing two modulation signals of $2f_0$ and $2\frac{m}{n} . f_{CL}$, first and second band-pass filters (72,74) to extract the two modulation signals of $2f_0$ and $2\frac{m}{n} . f_{CL}$ respectively independently from each other, a frequency divider (73) having a dividing ratio of $\frac{1}{2}$ receiving the filtered signal of $2f_0$ and recovering said carrier of $f_0$, and a frequency divider (75) having a dividing ratio of $\frac{n'}{m'} (= \frac{n}{2m})$ receiving the filtered signal of $2\frac{m}{n} . f_{CL}$ and recovering said clock signal of $f_{CL}$.

13. A radio communication system operated under a quadrature amplitude modulation (QAM) method, including:
    a transmitter unit (TU") operable to modulate a digital data signal (D) clocked with a clock frequency $f_{CL}$, with a carrier having a frequency $f_0$, and to transmit the modulated wave signal (Sout) to a radio transmission line; and
    a receiver unit (RU") operable to receive, via said radio transmission line, the modulated wave signal (S"in) to extract the carrier therefrom and reproduce the original digital data signal (D) with the use of the extracted carrier wave; wherein
    the transmitter unit (TU") contains therein an insertion means (53) or inserting at least one signal for carrier recovery into the modulated wave signal; and
    the receiver unit (RU") contains therein an extraction means (101,103) for extracting received frequency components $f_0 + k.f_{CL}$ from the received signal (Sin), a separation means for separating the extracted frequency components $f_0$ and $k.f_{CL}$ from each other, and a recovery means for recovering the original clock frequency component $f_{CL}$; characterised in that
    two signals for carrier recovery are inserted simultaneously into the modulated wave signal (Sout), within the frequency spectrum of the modulated wave signal, a first signal thereof having a frequency $f_0 + k.f_{CL}$ and a second signal thereof having a frequency $f_0 - k.f_{CL}$, where the constant k is determined as $\frac{1}{N}$ wherein N is a positive number larger than 1;
    and in that the recovery means of said receiver unit (RU") includes a subtractor (111) for cancelling the received signals for carrier recovery in the received modulated wave signal, said receiver unit being operable to reproduce the original digital data signal (D), using the recovered carrier frequency component $f_0$ and the recovered clock frequency component $f_{CL}$, from the received modulated wave signal.

14. A system as set forth in claim 13, wherein, in the transmitter unit (TU"), said insertion means comprises a frequency divider (100) having a dividing ratio $\frac{1}{N}$ and receiving a clock signal of $f_{CL}$ from a clock generator (54) to produce a signal of $\frac{1}{N} . f_{CL}$, a mixer (56) receiving both the signal of $\frac{1}{N} . f_{CL}$ and said carrier from a carrier generator (57) and producing two signals for carrier recovery of $f_0 + \frac{1}{N} . f_{CL}$ and $f_0 - \frac{1}{N} . f_{CL}$ simultaneously, a modulator (52) receiving, on one hand, said carrier of $f_0$ from said carrier generator (57) and receiving, on the other hand, said digital data signal converted into analog form ($S_A$) and producing said modulated wave signal, and a hybrid circuit (53) operable to insert said signals of $f_0 + \frac{1}{N} . f_{CL}$ . $f_{CL}$ and $f_0 - \frac{1}{N} . f_{CL}$ in the modulated wave signal and to transmit them to said receiver unit (RU").

15. A system as set forth in claim 14, wherein, in said receiver unit (RU"), said extraction means comprises first and second band-pass filters (101,103) to filter said signals of $f_0 + \frac{1}{N} . f_{CL}$ and $f_0 - \frac{1}{N} . f_{CL}$ from the received modulated wave signal (S"in), which filters are tuned to the frequencies $f_0 + \frac{1}{N} . f_{CL}$ and $f_0 - \frac{1}{N} . f_{CL}$, respectively; said separation means and said recovery means are cooperatively coupled with each other and constructed by, as a whole, a modulator (64) receiving output signals of $f_0 + \frac{1}{N} . f_{CL}$ and $f_0 - \frac{1}{N} . f_{CL}$ from said first and second band-pass filters (101,103) and producing two modulation signals of $2f_0$ and $2\frac{1}{N} . f_{CL}$, first and second band-pass filters (72,104) to filter said signals of $2f_0$ and $2\frac{1}{N} . f_{CL}$ from each other, which filters are tuned to the frequencies

$2f_0$ and $2\frac{1}{N} .f_{CL}$, respectively, a frequency divider (73-1) having a dividing ratio $\frac{1}{2}$ receiving the filtered signal of $2f_0$ and recovering said carrier of $f_0$, an $\frac{N}{2}$ multiplier (105) receiving the filtered signal of $2\frac{1}{N} .f_{CL}$ and recovering the clock signal of $f_{CL}$, and thereby operative to reproduce the original digital data signal, using the received carrier frequency component $f_0$ and the recovered clock frequency component $f_{CL}$, from the received modulated wave signal.

16. A system as set forth in claim 15, wherein a modulator (62) and a frequency divider (73-2) having a dividing ratio $\frac{1}{2}$ are further employed in said receiver unit (RU"), the modulator (62) receiving both the received modulated wave signal and said recovered carrier of $f_0$ and producing a modulated output signal ($S_A$") therefrom, the frequency divider (73-2) receiving the filtered signal of $2\frac{1}{N} .f_{CL}$ from said band-pass filter (104) and producing an offset frequency signal of $\frac{1}{N} .f_{CL}$, the subtractor (111) receiving both the modulated output signal ($S_A$") from the modulator (62) and the offset frequency signal and being operable to subtractively combine these two signals with each other so as to produce the original digital data signal in analog form ($S_A'$)' which analog-form original digital data signal is transformed, with the use of the recovered clock signal of $f_{CL}$, into the original digital data signal (D2).

17. A system as set forth in claim 16, wherein said subtractor (111) is constructed as a ring modulator.

**Revendications**

1. Un système de radiocommunication fonctionnant conformément à un procédé de modulation d'amplitude en quadratrure (MAQ), comprenant :

    une unité émettrice (TU, TU'), capable de moduler un signal de données numériques (D) défini par une fréquence d'horloge $f_{CL}$, avec une porteuse ayant une fréquence $f_0$, et d'émettre le signal d'onde modulée (Sout) vers une liaison de transmission hertzienne; et

    une unité réceptrice (RU, RU'), capable de recevoir le signal d'onde modulée (Sin), par l'intermédiaire de la liaison de transmission hertzienne, d'extraire la porteuse à partir de ce signal et de reproduire le signal de données numériques d'origine (D), en utilisant l'onde porteuse extraite; dans lequel

    l'unité émettrice (TU, TU') contient des moyens d'insertion pour insérer au moins un signal pour la récupération de la porteuse dans le signal d'onde modulée, le signal ou chaque signal pour la récupération de la porteuse ayant une fréquence définie par $f_0 + k.f_{CL}$, le facteur k satisfaisant les inégalités $0 < |k| < 1$; et

    l'unité réceptrice (RU, RU') contient des moyens d'extraction (63, 71) pour extraire les composantes de fréquence reçues $f_0 + k.f_{CL}$, des moyens de séparation (67) pour séparer mutuellement les composantes de fréquence extraites $f_0$ et $k.f_{CL}$, et des moyens de récupération (65) pour récupérer la composante de fréquence d'horloge d'origine $f_{CL}$;

    caractérisé en ce que les moyens d'insertion comprennent un filtre (51) capable de créer un ou deux noeuds ou zéros d'un côté ou de l'autre ou des deux côtés du signal d'onde modulée, respectivement à l'une ou l'autre des fréquences $f_0 + k.f_{CL}$ et $f_0 - k.f_{CL}$, ou aux deux, à l'intérieur du spectre de fréquence du signal d'onde modulée, et des moyens pour insérer le signal ou les deux signaux pour la récupération de la porteuse dans le noeud ou les noeuds ainsi créés; et en ce que l'unité réceptrice (RU, RU') est capable de reproduire le signal de données numériques d'origine (D), en utilisant la composante de fréquence porteuse récupérée $f_0$ et la composante de fréquence d'horloge récupérée $f_{CL}$, à partir du signal d'onde modulée qui est reçu.

2. Un système selon la revendication 1, dans lequel le filtre (51) est un filtre à atténuation en cosinus, et la constante k est déterminée par un rapport d'atténuation de ce filtre.

3. Un système selon la revendication 1, dans lequel le filtre (51) est un filtre de type gaussien.

4. Un système selon la revendication 1, dans lequel le filtre (51) est réalisé sous la forme d'une ligne de transmission à réponse partielle, dans laquelle une égalisation est effectuée de façon à produire de manière discrète ce qu'on appelle un brouillage intersymbole.

5. Un système selon l'une quelconque des revendications précédentes, dans lequel les moyens d'insertion comprennent un circuit hybride (53) qui est capable de recevoir, d'une part, un signal de sortie d'un modulateur (52) dans lequel le signal filtré provenant du filtre (51) est modulé avec la porteuse de fréquence $f_0$, et de recevoir, d'autre part, le signal pour la récupération de la porteuse, de fréquence $f_0 + k.f_{CL}$, pour produire ainsi le signal d'onde modulée (Sout).

6. Un système selon l'une quelconque des revendications précédentes, dans lequel la constante k est égale à $\frac{m}{n}$, en désignant par m et n des entiers positifs qui satisfont la relation m < n.

7. Un système selon la revendication 6, dans lequel, dans l'unité émettrice (TU), les moyens d'insertion comprennent en outre un diviseur de fréquence (55) ayant un rapport de division égal à $\frac{m}{n}$, et recevant un signal d'horloge de fréquence $f_{CL}$ à partir d'un générateur d'horloge (54), pour produire un signal de fréquence $\frac{m}{n}$ $.f_{CL}$, un mélangeur (56) destiné à recevoir à la fois le signal de fréquence $\frac{m}{n}$ $f_{CL}$, et la porteuse de fréquence $f_0$ à partir d'un' générateur de porteuse (57), et un filtre passe-bande (59), pour produire le signal pour la récupération de la porteuse, de fréquence $f_0$ + $\frac{m}{n}$ $.f_{CL}$, qui doit être appliqué à l'entrée du circuit hybride (53).

8. Un système selon la revendication 6 ou 7, dans lequel, dans l'unité réceptrice : les moyens d'extraction comprennent un filtre passe-bande (63) pour filtrer le signal de fréquence $f_0$ + $\frac{m}{n}$ $.f_{CL}$, à partir du signal d'onde modulée qui est reçu, ce filtre (63) étant accordé sur la fréquence $f_0$ + $\frac{m}{n}$ $.f_{CL}$; les moyens de séparation et les moyens de récupération sont mutuellement associés de façon à coopérer, et sont constitués, dans leur ensemble, par un circuit de récupération de rythme de bit (65) qui reçoit le signal d'onde modulée reçu et qui récupère à partir de lui le signal de fréquence $f_{CL}$, un diviseur de fréquence (66) ayant un rapport de division de $\frac{m}{n}$, qui reçoit le signal récupéré de fréquence $f_{CL}$ et qui produit ensuite le signal de fréquence $\frac{m}{n}$ $.f_{CL}$, un modulateur (64) qui module le signal de fréquence $f_0$ + $\frac{m}{n}$ $.f_{CL}$ provenant du filtre passe bande (63) des moyens d'extraction avec le signal de fréquence $\frac{m}{n}$ $.f_{CL}$ qui provient du diviseur de fréquence de rapport de division $\frac{m}{n}$, et qui produit deux signaux de modulation ayant des fréquence $f_0$ et $f_0$ + $2\frac{m}{n}$ $.f_{CL}$, et un filtre passe-bande (67) pour extraire, parmi les deux signaux précités, le signal de modulation de fréquence $f_0$, pour constituer la porteuse.

9. Un système selon l'une quelconque des revendications 1 à 4, dans lequel les moyens d'insertion comprennent un circuit hybride (53) qui est capable de recevoir, d'une part, un signal de sortie d'un modulateur (52) dans lequel le signal filtré provenant du filtre (51) est modulé avec la porteuse de fréquence $f_0$, et de recevoir, d'autre part, les signaux pour la récupération de la porteuse, de fréquence $f_0$ + $k.f_{CL}$ et

$f_0$ - $k.f_{CL}$, pour produire ainsi le signal d'onde modulée (Sout).

10. Un système selon la revendication 9, dans lequel la constante K est égale à $\frac{m}{n}$, en désignant par m et n des entiers positifs qui satisfont la relation m < n.

11. Un système selon la revendication 10, dans lequel, dans l'unité émettrice (TU'), les moyens d'insertion comprennent en outre un diviseur de fréquence (55) ayant un rapport de division de $\frac{m}{n}$ et recevant un signal d'horloge de fréquence $f_{CL}$ à partir d'un générateur d'horloge (54), pour produire un signal de fréquence $\frac{m}{n}$ $.f_{CL}$, un mélangeur (56) recevant à la fois le signal de fréquence $\frac{m}{n}$ $.f_{CL}$ et la porteuse de fréquence $f_0$ provenant d'un générateur de porteuse (57), et des premier et second filtres passe-bande (59, 59'), pour produire respectivement les signaux pour la récupération de la porteuse, ayant les fréquences $f_0$ + $\frac{m}{n}$ $.f_{CL}$ et $f_0$ - $\frac{m}{n}$ $.f_{CL}$, qui sont destinés à être appliqués à l'entrée du circuit hybride (53).

12. Un système selon la revendication 10 ou 11, dans lequel, dans l'unité réceptrice (RU') : les moyens d'extraction sont constitués par des premier et second filtres passe-bande (63, 71) qui sont destinés à filtrer respectivement les signaux de fréquences $f_0$ + $\frac{m}{n}$ $.f_{CL}$ et $f_0$ - $\frac{m}{n}$ $.f_{CL}$ à partir du signal d'onde modulée qui est reçu, ces filtres (63, 71) étant respectivement accordés sur les fréquences $f_0$ + $\frac{m}{n}$ $.f_{CL}$ et $f_0$ - $\frac{m}{n}$ $.f_{CL}$; les moyens de séparation et les moyens de récupération sont mutuellement associés de façon à coopérer, et ils sont constitués, dans leur ensemble, par un modulateur (64) recevant les deux signaux filtrés de fréquences $f_0$ + $\frac{m}{n}$ $.f_{CL}$ et $f_0$ - $\frac{m}{n}$ $.f_{CL}$ à partir des premier et second filtres passe-bande (63, 71), et produisant deux signaux de modulation de fréquences $2f_0$ et $2\frac{m}{n}$ $.f_{CL}$, des premier et second filtres passe-bande (72, 74) pour extraire respectivement les deux signaux de modulation de fréquences $2f_0$ et $2\frac{m}{n}$ $.f_{CL}$, indépendamment l'un de l'autre, un diviseur de fréquence (73) ayant un rapport de division de $\frac{1}{2}$ qui reçoit le signal filtré de fréquence $2f_0$ et qui récupère la porteuse de fréquence $f_0$, et un diviseur de fréquence (75) ayant un rapport de division de $\frac{n'}{m'}$ ($= \frac{n}{2m}$), qui reçoit le signal filtré de fréquence $2\frac{m}{n}$ $.f_{CL}$ et qui récupère le signal d'horloge de fréquence $f_{CL}$.

13. Un système de radiocommunication fonctionnant conformément à un procédé de modulation d'amplitude en quadrature (MAQ), comprenant :

une unité émettrice (TU") capable de moduler un signal de données numériques (D), défini par une fréquence d'horloge $f_{CL}$, avec une porteuse ayant une fréquence $f_0$, et d'émettre le signal d'onde modulée (Sout) vers une liaison de transmission hertzienne; et

une unité réceptrice (RU") capable de recevoir le signal d'onde modulée (S"in), par l'intermédiaire de la liaison de transmission hertzienne, pour en extraire la porteuse et pour reproduire le signal de données numériques d'origine (D) en utilisant l'onde porteuse extraite; dans lequel

l'unité émettrice (TU") contient des moyens d'insertion (53) qui sont destinés à insérer au moins un signal pour la récupération de la porteuse dans le signal d'onde modulée; et

l'unité réceptrice (RU") contient des moyens d'extraction (101, 103) pour extraire des composantes de fréquence reçues $f_0 + k.f_{CL}$ à partir du signal reçu (Sin), des moyens de séparation pour séparer mutuellement les composantes de fréquence extraites $f_0$ et $k^{\bullet}f_{CL}$, et des moyens de récupération pour récupérer la composante de fréquence d'horloge d'origine $f_{CL}$; caractérisé en ce que

deux signaux pour la récupération de la porteuse sont insérés simultanément dans le signal d'onde modulée (Sout), à l'intérieur du spectre de fréquence du signal d'onde modulée, un premier de ces signaux ayant une fréquence $f_0 + k.f_{CL}$, et un second de ces signaux ayant une fréquence $f_0 - K.f_{CL}$, la constante k étant égale à $\frac{1}{N}$, en désignant par N un nombre positif supérieur à 1;

et en ce que les moyens de récupération de l'unité réceptrice (RU") comprennent un soustracteur (111) pour annuler les signaux reçus pour la récupération de la porteuse dans le signal d'onde modulée qui est reçu, cette unité réceptrice étant capable de reproduire le signal de données numériques d'origine (D), en utilisant la composante de fréquence porteuse récupérée $f_0$ et la composante de fréquence d'horloge récupérée $f_{CL}$, à partir du signal d'onde modulée qui est reçu.

14. Un système selon la revendication 13, dans lequel, dans l'unité émettrice (TU"), les moyens d'insertion comprennent un diviseur de fréquence (100) ayant un rapport de division de $\frac{1}{N}$, et recevant un signal d'horloge de fréquence $f_{CL}$ à partir d'un générateur d'horloge (54), pour produire un signal de fréquence $\frac{1}{N}.f_{CL}$, un mélangeur (56) recevant à la fois le signal de fréquence $\frac{1}{N}.f_{CL}$ et la porteuse provenant d'un générateur de porteuse (57), et produisant simultanément deux signaux pour la récupération de la porteuse, ayant des fréquences respectives $f_0 + \frac{1}{N}.f_{CL}$ et $f_0 - \frac{1}{N}.f_{CL}$, un modulateur (52) recevant, d'une part, la porteuse de fréquence $f_0$ qui provient du générateur de porteuse (57), et recevant d'autre part le signal de données numériques converti sous forme analogique ($S_A$), et produisant le signal d'onde modulée, et un circuit hybride (53) capable d'insérer dans le signal d'onde modulée les signaux de fréquences $f_0 + \frac{1}{N}.f_{CL}$ et $f_0 - \frac{1}{N}.f_{CL}$, et de les émettre vers l'unité réceptrice (RU").

15. Un système selon la revendication 14, dans lequel, dans l'unité réceptrice (RU"), les moyens d'extraction comprennent des premier et second filtres passe-bande (101, 103) pour filtrer les signaux de fréquences respectives $f_0 + \frac{1}{N}.f_{CL}$ et $f_0 - \frac{1}{N}.f_{CL}$ à partir du signal d'onde modulée qui est reçu (S"in), ces filtres étant respectivement accordés sur les fréquences $f_0 + \frac{1}{N}.f_{CL}$ et $f_0 - \frac{1}{N}.f_{CL}$; les moyens de séparation et les moyens de récupération sont mutuellement associés de façon à coopérer, et ils sont constitués, dans leur ensemble, par un modulateur (64) recevant des signaux de sortie de fréquences $f_0 + \frac{1}{N}.f_{CL}$ et $f_0 - \frac{1}{N}.f_{CL}$ à partir des premier et second filtres passe-bande (101, 103), et produisant deux signaux de modulation ayant des fréquences $2f_0$ et $2\frac{1}{N}.f_{CL}$, des premier et second filtres passe-bande (72, 104) pour filtrer mutuellement les signaux de fréquences $2f_0$ et $\frac{1}{2N}.f_{CL}$, ces filtres étant respectivement accordés sur les fréquences $2f_0$ et $2\frac{1}{N}.f_{CL}$, un diviseur de fréquence (73-1) ayant un rapport de division de $\frac{1}{2}$, recevant le signal filtré de fréquence $2f_0$ et récupérant la porteuse de fréquence $f_0$, un multiplicateur par $\frac{N}{2}$ (105), recevant le signal filtré de fréquence $2\frac{1}{N}.f_{CL}$ et récupérant le signal d'horloge de fréquence $f_{CL}$, pour reproduire ainsi le signal de données numériques d'origine, en utilisant la composante de fréquence porteuse reçue $f_0$, et la composante de fréquence d'horloge récupérée $f_{CL}$, à partir du signal d'onde modulée qui est reçu.

16. Un système selon la revendication 15, dans lequel un modulateur (62) et un diviseur de fréquence (73-2) ayant un rapport de division de $\frac{1}{2}$ sont en outre employés dans l'unité réceptrice (RU"), le modulateur (62) recevant à la fois le signal d'onde modulée qui est reçu et la porteuse récupérée de fréquence $f_0$, et produisant à partir de ceux-ci un signal de sortie modulé (S"$_A$), le diviseur de fréquence (73-2) recevant le signal filtré de fréquence $2_N^1$ .$f_{CL}$ à partir du filtre passe-bande (104), et produisant un signal de fréquence de décalage de fréquence $\frac{1}{N}$ .$f_{CL}$, le soustracteur (111) recevant à la fois le signal de sortie modulé (S"$_A$) provenant du modulateur (62) et le signal de fréquence de décalage, et étant capable de combiner mutuellement ces deux signaux de façon soustractive, afin de produire le signal de données numériques d'origine sous forme analogique (S'$_A$), ce signal de données numérique d'origine sous forme analogique étant transformé pour donner le signal de données numériques d'origine (D2), en utilisant le signal d'horloge récupéré de fréquence $f_{CL}$.

17. Un système selon la revendication 16, dans lequel le soustracteur (111) est réalisé sous la forme d'un modulateur en anneau.

## Patentansprüche

1. Radiokommunikationssystem, das nach einem Quadraturamplitudenmodulations-(QAM)-Verfahren arbeitet, mit:

einer Sendeeinheit (TU, TU'), die betreibbar ist, um ein digitales Datensignal (D), das mit einer Taktfrequenz $f_{CL}$ getaktet wird, mit einem Träger zu modulieren, der eine Frequenz $f_0$ hat, und um das modulierte Wellensignal (Sout) auf eine Radio-Sendeleitung zu übertragen; und

einer Empfangseinheit (RU, RU'), die betreibbar ist, über die genannte Radio-Sendeleitung das modulierte Wellensignal (Sin) zu empfangen, den Träger daraus zu extrahieren und das originale digitale Datensignal (D) unter Verwendung der extrahierten Trägerwelle zu reproduzieren; bei welchem

die Sendeeinheit (TU, TU') eine Einfügungseinrichtung enthält, um wenigstens ein Signal zur Trägerrückgewinnung in das modulierte Wellensignal einzufügen, wobei das oder jedes Signal zur Trägerrückgewinnung eine Frequenz hat, die definiert ist als $f_0$ + k.$f_{CL}$, wobei eine Ungleichung 0 < | k | < 1 erfüllt ist; und

die Empfangseinheit (RU, RU') eine Extraktionseinrichtung (63, 71) zum Extrahieren der empfangenen Frequenzkomponenten $f_0$ + k.$f_{CL}$, eine Trenneinrichtung (67), zum Trennen der extrahierten Frequenzkomponenten $f_0$ und k.$f_{CL}$ voneinander, und eine Rückgewinnungseinrichtung (65), zum Rückgewinnen der ursprünglichen Taktfrequenzkomponente $f_{CL}$ enthält;

dadurch gekennzeichnet, daß die genannte Einfügungseinrichtung einen Filter (51) umfaßt, der betreibbar ist, um entweder einen oder zwei Knoten an jeder Seite von beiden Seiten des genannten modulierten Wellensignals bei entweder einer oder beiden Frequenzen $f_0$ + k.$f_{CL}$ bzw. $f_0$ - k.$f_{CL}$ innerhalb des Frequenzspektrums des modulierten Wellensignals zu erzeugen, und Einrichtungen, um jenes eine oder jene zwei Signale zur Trägerrückgewinnung in den oder die so erzeugten Knoten einzufügen, und daß die Empfangseinheit (RU, RU') betreibbar ist, um aus dem empfangenen modulierten Wellensignal, das ursprüngliche digitale Datensignal (D) zu reproduzieren, unter Verwendung der rückgewonnenen Trägerfrequenzkomponente $f_0$ und der rückgewonnenen Taktfrequenzkomponente $f_{CL}$.

2. System nach Anspruch 1, bei dem der genannte Filter (51) ein Cosinus-Dämpfungsfilter ist, dessen Konstante k durch ein Dämpfungsverhältnis davon bestimmt ist.

3. System nach Anspruch 1, bei dem der genannte Filter (51) ein Gauß-scher Filter ist.

4. System nach Anspruch 1, bei dem der genannte Filter (51) als eine Teilantwortsendeleitung ausgebildet ist, in welcher ein Ausgleich so durchgeführt wird, daß diskrete sogenannte Intersymbolinterferenzen erzeugt werden.

5. System nach einem der vorhergehenden Ansprüche, bei dem die genannte Einfügungseinrichtung eine Hybrid-Schaltung (53) enthält, die betreibbar ist, um einerseits ein Ausgangssignal von einem Modulator (52), in dem das gefilterte Signal von dem genannten Filter (51) mit dem genannten Träger von $f_0$ moduliert wird, zu empfangen, und um andererseits das genannte Signal zur Trägerrückgewinnung von $f_0$ + k.$f_{CL}$ zu empfangen, um dadurch das genannte modulierte Wellensignal (Sout) zu erzeugen.

6. System nach einem der vorhergehenden Ansprüche, bei dem die Konstante k $\frac{m}{n}$ ist, wobei m und n positive ganze Zahlen sind und m < n gilt.

7. System nach Anspruch 6, bei dem in der genannten Sendeeinheit (TU) die genannte Einfügungseinrichtung ferner einen Frequenzteiler (55) umfaßt, der ein Teilungsverhältnis $\frac{m}{n}$ hat und ein Taktsignal von $f_{CL}$ von einem Taktgenerator (54) empfängt, um ein Signal von $\frac{m}{n}$ .$f_{CL}$ zu erzeugen, einen Mischer (56), der sowohl das Signal mit $\frac{m}{n}$ .$f_{CL}$ als auch den genannten Träger mit $f_0$ von einem Trägergenerator (57) empfängt, und einen Bandpassfilter (59), um das genannte Signal für die Trägerrückgewinnung mit $f_0 + \frac{m}{n} \cdot f_{CL}$ zu erzeugen, das in die genannte Hybrid-Schaltung (53) eingegeben werden soll.

8. System nach Anspruch 6 oder 7, bei dem in der genannten Empfangseinheit: die genannte Extraktionseinrichtung einen Bandpassfilter (63) umfaßt, um das genannte Signal mit $f_0 + \frac{m}{n} \cdot f_{CL}$ aus dem empfangenen modulierten Wellensignal zu filtern, welcher Filter (63) auf die Frequenz $f_0 + \frac{m}{n} \cdot f_{CL}$ abgestimmt ist; die genannte Trenneinrichtung und die genannte Rückgewinnungseinrichtung kooperativ miteinander gekoppelt und, als ein Ganzes, aufgebaut sind durch eine Bitzeitgeber-Rückgewinnungsschaltung (65), welche das empfangene modulierte Wellensignal empfängt und das Signal mit $f_{CL}$ daraus rückgewinnt, einen Frequenzteiler (66), der ein Teilungsverhältnis $\frac{m}{n}$ hat und das rückgewonnene Signal mit $f_{CL}$ empfängt und dann das Signal mit $\frac{m}{n} \cdot f_{CL}$ erzeugt, einen Modulator (64), der betreibbar ist, um das Signal mit $f_0 + \frac{m}{n} \cdot f_{CL}$ aus dem genannten Bandpassfilter (63) der genannten Extraktionseinrichtung mit dem Signal mit $\frac{m}{n} \cdot f_{CL}$ von dem genannten Frequenzteiler mit dem Teilungsverhältnis $\frac{m}{n}$ zu modulieren und zwei Modulationssignale mit $f_0$ und $f_0 + 2\frac{m}{n} \cdot f_{CL}$ zu erzeugen, und einen Bandpassfilter (67), um das Modulationssignal mit $f_0$, als dem genannten Träger, aus den beiden zu extrahieren.

9. System nach einem der Ansprüche 1 bis 4, bei dem die genannte Einfügungseinrichtung darin eine Hybridschaltung (53) enthält, die betreibbar ist, um einerseits ein Ausgangssignal von einem Modulator (52) zu empfangen, in dem das gefilterte Signal von dem genannten Filter (51) mit dem genannten Träger mit $f_0$ moduliert ist, und um andererseits die genannten Signale zur Trägerrückgewinnung mit $f_0 + k \cdot f_{CL}$ und $f_0 - k \cdot f_{CL}$ zu empfangen, um dadurch das genannte modulierte Wellensignal (Sout) zu erzeugen.

10. System nach Anspruch 9, bei dem die Konstante $k \frac{m}{n}$ ist, wobei m und n positive ganze Zahlen sind und die Ungleichung $m < n$ erfüllt ist.

11. System nach Anspruch 10, bei dem, in der genannten Sendeeinheit (TU') die genannte Einfügungseinrichtung ferner einen Frequenzteiler (55) umfaßt, der ein Teilungsverhältnis $\frac{m}{n}$ hat und ein Taktsignal mit $f_{CL}$ von einem Taktgenerator (54) empfängt, um ein Signal mit $\frac{m}{n}$

$\cdot f_{CL}$ zu erzeugen, einen Mischer (56), der sowohl das Signal mit $\frac{m}{n} \cdot f_{CL}$ als auch den genannten Träger mit $f_0$ von einem Trägergenerator (57) empfängt, und erste und zweite Bandpassfilter (59, 59'), um die genannten Signale zur Trägerrückgewinnung mit $f_0 + \frac{m}{n} \cdot f_{CL}$ bzw. $f_0 - \frac{m}{n} \cdot f_{CL}$ zu erzeugen, die der genannten Hybridschaltung (53) eingegeben werden sollen.

12. System nach Anspruch 10 oder 11, bei dem, in der genannten Empfangseinheit (RU'): die genannte Extraktionseinrichtung aus ersten und zweiten Bandpassfiltern (63, 71) besteht, um die genannten Signale mit $f_0 + \frac{m}{n} \cdot f_{CL}$ bzw. $f_0 - \frac{m}{n} \cdot f_{CL}$ aus dem empfangenen modulierten Wellensignal zu filtern, welche Filter (63, 71) auf die Frequenzen $f_0 + \frac{m}{n} \cdot f_{CL}$ bzw. $f_0 - \frac{m}{n} \cdot f_{CL}$ abgestimmt sind; die genannte Trenneinrichtung und die Rückgewinnungseinrichtung kooperativ miteinander gekoppelt und, als ein Ganzes, gebildet sind durch einen Modulator (64), der beide gefilterten Signale mit $f_0 + \frac{m}{n} \cdot f_{CL}$ und $f_0 - \frac{m}{n} \cdot f_{CL}$ von dem genannten ersten und zweiten Bandpassfiltern (63, 71) erhält und zwei Modulationssignale mit $2f_0$ und $2\frac{m}{n} \cdot f_{CL}$ erzeugt, erste und zweite Bandpassfilter (72, 74), um die beiden Modulationssignale mit $2f_0$ bzw. $2\frac{m}{n} \cdot f_{CL}$ unabhängig voneinander zu extrahieren, einen Frequenzteiler (73), der ein Teilungsverhältnis von $\frac{1}{2}$ hat und das gefilterte Signal mit $2f_0$ empfängt und den genannten Träger mit $f_0$ rückgewinnt, und einen Frequenzteiler (75), der ein Teilungsverhältnis von $\frac{n'}{m'}$ ($= \frac{n}{2m}$) hat und das gefilterte Signal mit $2\frac{m}{n} \cdot f_{CL}$ empfängt und das genannte Taktsignal $f_{CL}$ rückgewinnt.

13. Radiokommunikationssystem, das nach einem Quadraturamplitudenmodulations-(QAM)-Verfahren arbeitet, mit:

einer Sendeeinheit (TU''), die betreibbar ist, um ein digitales Datensignal (D), das mit einer Taktfrequenz $f_{CL}$ getaktet ist, mit einem Träger zu modulieren, der eine Frequenz $f_0$ hat, und um das modulierte Wellensignal (Sout) auf eine Radio-Sendeleitung zu übertragen; und

einer Empfangseinheit (RU''), die betreibbar ist, um über die genannte Radio-Sendeleitung das modulierte Wellensignal (S''in) zu empfangen, um daraus den Träger zu extrahieren und das originale digitale Datensignal (D) unter Verwendung der extrahierten Trägerwelle zu reproduzieren; bei welchem

die Sendeeinheit (TU'') darin eine Einfügungseinrichtung (53) enthält, um wenigstens ein Signal zur Trägerrückgewinnung in das modulierte Wellensignal einzufügen; und

die Empfangseinheit (RU'') darin eine Extraktionseinrichtung (101, 103) zum Extrahieren der empfangenen Frequenzkomponenten $f_0$ + $k.f_{CL}$ aus dem empfangenen Signal (Sin) zu extrahieren, eine Trenneinrichtung zum Trennen der extrahierten Frequenzkomponenten $f_0$ und $k.f_{CL}$ voneinander, und eine Rückgewinnungseinrichtung zum Rückgewinnen der ursprünglichen Taktfrequenzkomponente $f_{CL}$ enthält; dadurch gekennzeichnet, daß

beide Signale zur Trägerrückgewinnung gleichzeitig in das modulierte Wellensignal (Sout) eingefügt sind, innerhalb des Frequenzspektrums des modulierten Wellensignals, wobei ein erstes Signal davon eine Frequenz $f_0$ + $k.f_{CL}$ und ein zweites Signal davon eine Frequenz $f_0$ - $k.f_{CL}$ hat, wobei die Konstante k bestimmt ist als $\frac{1}{N}$, wobei N eine positive Zahl größer als 1 ist;

und daß die Rückgewinnungseinrichtung der genannten Empfangseinheit (RU'') einen Substaktor (111) enhält, um die empfangenen Signale zur Trägerrückgewinnung in dem empfangen modulierten Wellensignal zu löschen, welche Empfangseinheit betreibbar ist, um das originale digitale Datensignal (D) zu reproduzieren, unter Verwendung der aus dem empfangenen modulierten Wellensignal rückgewonnenen Trägerfrequenzkomponente $f_0$ und der rückgewonnenen Taktfrequenzkomponente $f_{CL}$.

14. System nach Anspruch 13, bei dem in der Sendeeinheit (TU'') die genannte Einfügungseinrichtung einen Frequenzteiler (100) umfaßt, der ein Teilungsverhältnis $\frac{1}{N}$ hat und ein Taktsignal mit $f_{CL}$ von einem Taktgenerator (54) empfängt, um ein Signal mit $\frac{1}{N}.f_{CL}$ zu erzeugen, und einen Mischer (56), der sowohl das Signal $\frac{1}{N}.f_{CL}$ als auch den genannten Träger von einem Trägergenerator (57) empfängt und zwei Signale zur Trägerrückgewinnung mit $f_0$ + $\frac{1}{N}.f_{CL}$ und $f_0$ - $\frac{1}{N}.f_{CL}$ gleichzeitig erzeugt, einen Modulator (52), der einerseits die genannten Träger mit $f_0$ von dem genannten Trägergenerator (57) empfängt, und andererseits das genannte digitale Datensignal, konvertiert in analoge Form ($S_A$), empfängt und das genannte modulierte Wellensignal erzeugt, und eine Hybridschaltung (53), die betreibbar ist, um die genannten Signale mit $f_0$ + $\frac{1}{N}.f_{CL}$ und $f_0$ - $\frac{1}{N}.f_{CL}$ in das modulierte Wellensignal einzufügen, und um sie zu der genannten Empfangseinheit (RU'') zu senden.

15. System nach Anspruch 14, bei dem, in der genannten Empfangseinheit (RU''), die genannte Extraktionseinrichtung erste und zweite Bandpassfilter (101, 103) umfaßt, um die genannten Signale mit $f_0$ + $\frac{1}{N}.f_{CL}$ und $f_0$ - $\frac{1}{N}.f_{CL}$ aus dem empfangenen modulierten Wellensignal (S''in) zu filtern, welche Filter auf die Frequenzen $f_0$ + $\frac{1}{N}.f_{CL}$ bzw. $f_0$ - $\frac{1}{N}.f_{CL}$ abgestimmt sind; welche genannte Trenneinrichtung und Rückgewinnungseinrichtung kooperativ miteinander gekoppelt und, als ein Ganzes, gebildet sind durch einen Modulator (64), der Ausgangssignale mit $f_0$ + $\frac{1}{N}.f_{CL}$ und $f_0$ - $\frac{1}{N}.f_{CL}$ von den genannten ersten und zweiten Bandpassfiltern (101, 103) empfängt, und zwei Modulationssignale mit $2f_0$ und $2\frac{1}{N}.f_{CL}$ empfängt, durch erste und zweite Bandpassfilter (72, 104), um die genannten Signale mit $2f_0$ und $2\frac{1}{N}.f_{CL}$ voneinander zu filtern, welche Filter auf die Frequenzen $2f_0$ bzw. $2\frac{1}{N}.f_{CL}$ abgestimmt sind, einen Frequenzteiler (73-1), der ein Teilungsverhältnis $\frac{1}{2}$ hat und das gefilterte Signal mit $2f_0$ empfängt und den genannten Träger mit $f_0$ wiedergewinnt, einen $\frac{N}{2}$-Multiplizierer (105), der das gefilterte Signal mit $2\frac{1}{N}.f_{CL}$ empfängt und das Taktsignal mit $f_{CL}$ wiederherstellt, und dadurch betreibbar ist, um das originale Datensignal rückzugewinnen, unter Verwendung der empfangenen Trägerfrequenzkomponente $f_0$ der rückgewonnenen Taktfrequenzkomponente $f_{CL}$ aus dem empfangenen modulierten Wellensignal.

16. System nach Anspruch 15, bei dem ein Modulator (62) und ein Frequenzteiler (73-2), der ein Teilungsverhältnis $\frac{1}{2}$ hat, ferner in der genannten Empfangseinheit (RU'') verwendet werden, der Modulator (62) sowohl das empfangene modulierte Wellensignal als auch den genannten rückgewonnenen Träger mit $f_0$ empfängt und daraus ein moduliertes Ausgangssignal ($S_A''$) erzeugt, der Frequenzteiler (73-2) das gefilterte Signal von $2\frac{1}{N}.f_{CL}$ von dem genannten Bandpassfilter (104) empfängt und ein frequenzversetztes Signal mit $\frac{1}{N}.f_{CL}$ erzeugt, der Substraktor (111) sowohl das modulierte Ausgangssignal ($S_A''$) von dem Modulator (62) als auch das frequenzversetzte Signal empfängt und betreibbar ist, um subtraktiv diese beiden Signale miteinander zu kombinieren, um so das originale digitale Datensignal in analoger Form ($S_A'$) zu erzeugen, welches originale digitale Datensignal aus der analogen Form, unter Verwendung des rückgewonnen Taktsignals mit $f_{CL}$, in das ursprüngliche digitale Datensignal (D2) transformiert wird.

17. System nach Anspruch 16, bei dem der genannte Substraktor (111) als ein Ringmodulator aufgebaut ist.

## Fig. 1

## Fig. 2

## Fig. 3

EP 0 122 127 B1

# Fig. 4

# Fig. 5A

## Fig. 5B

## Fig. 5C

EP 0 122 127 B1

## Fig. 6

## Fig. 7

19

Fig. 8A

Fig. 8B

Fig. 9

*Fig. 10*

*Fig. 11*

*Fig. 12*